# EUROPÄISCHE PATENTSCHRIFT

(11) **EP 1 970 647 B1**
(45) Veröffentlichungstag und Bekanntmachung des Hinweises auf die Patenterteilung: **30.06.2010**
(21) Anmeldenummer: 08158633.1
(22) Anmeldetag: 19.08.2003
(51) Int. Cl.: F25B 15/00

(54) **Energieumwandlungssystem mit mehrstufiger Absorptionskältemaschine (AKM) oder Absorptionswärmepumpe (AWP)**
Energy conversion system with multi-stage absorption cooling machine or absorption heat pump
Système de transformation d'énergie doté d'une machine de refroidissement d'absorption (AKM) à plusieurs niveaux ou d'une pompe à chaleur d'absorption (AWP)

(30) Priorität: 19.08.2002 DE 10237850
(43) Veröffentlichungstag der Anmeldung: 17.09.2008
(62) Teilanmeldung aus: 03018851.0
(73) Patentinhaber: ZAE Bayern Bayerisches Zentrum für angewandte Energieforschung e.V., 85748 Garching (DE)
(72) Erfinder: Kren, Christoph, 61352 Bad Homburg v.d.H. (DE); Schweigler, Christian, 82178 Puchheim (DE); Storkenmaier, Franz, 85643 Steinhöring (DE)
(74) Vertreter: Winter, Brandl, Fürniss, Hübner, Röss, Kaiser, Polte - Partnerschaft

(56) Entgegenhaltungen:
- WO-A-93/11393
- US-A- 4 439 999
- US-A- 6 003 331
- US-A- 6 141 987
- US-A1- 2002 062 647
- US-B1- 6 311 513
- PATENT ABSTRACTS OF JAPAN Bd. 2000, Nr. 20, 10. Juli 2001 (2001-07-10) & JP 2001 082823 A (ART PLAN:KK;INUBUSHI SAIEN; NISHIZAKI:KK), 30. März 2001 (2001-03-30)
- PATENT ABSTRACTS OF JAPAN Bd. 2000, Nr. 02, 29. Februar 2000 (2000-02-29) & JP 11 304274 A (KAWASAKI THERMAL ENG CO LTD), 5. November 1999 (1999-11-05)
- PATENT ABSTRACTS OF JAPAN Bd. 2002, Nr. 09, 4. September 2002 (2002-09-04) -& JP 2002 147885 A (SANYO ELECTRIC CO LTD;SANYO ELECTRIC AIR CONDITIONING CO LTD), 22. Mai 2002 (2002-05-22)

## Beschreibung

Die Erfindung betrifft ein Energieumwandlungssystem mit mehrstufiger Absorptionskältemaschine (AKM) oder Absorptionswärmepumpe (AWP) nach Anspruch 1.

Bei Absorptionskältemaschinen bzw. Absorptionswärmepumpen hängen sowohl das erzielbare Wärmeverhältnis (COP) zwischen Nutzkälte und Antriebswärme bzw. Nutzwärme und Antriebswärme als auch das Temperaturniveau, auf dem die Antriebswärme eingekoppelt werden, kann, in erster Linie von der Anzahl der Stufen in dem jeweils verwendeten Absorptionskreislauf ab. Beispielsweise erzielen derzeit erhältliche einstufige Absorptionsmaschinen (sog. Single-Effect Anlagen) i.d.R. geringere Wärmeverhältnisse als die ebenfalls erhältlichen zweistufigen Maschinen (sog. Double-Effect Anlagen), andererseits kann in einstufigen Maschinen bei sonst gleichen Einsatzbedingungen Antriebswärme auf einem niedrigeren Temperaturniveau genutzt werden als in zweistufigen Maschinen. Die derzeit in Entwicklung befindlichen dreistufigen Absorptionsmaschinen (sog. Triple-Effect Anlagen) lassen im Vergleich zu den zweistufigen Maschinen ein nochmals gesteigertes Wärmeverhältnis bei gleichzeitiger Erhöhung des Temperaturniveaus der Antriebswärme erwarten.

In vielen technisch relevanten Anwendungsfällen stehen jedoch verschiedene Wärmequellen auf unterschiedlichen Temperaturniveaus und bzw. oder Wärmequellen auf gleitenden Temperaturniveaus zum Antrieb von Absorptionsmaschinen zur Verfügung, das Verhältnis der Wärmemengen auf den unterschiedlichen Temperaturniveaus kann dabei variabel vom jeweiligen Betriebszustand abhängen. Als Beispiel sei hier die Kopplung einer AbsarptianslEältamaschina mit einem Verbrennungsmotor angeführt, wobei hier die Motorabwärme zu einem Teil im Motorkühlmittelkreis auf niedrigem Temperaturniveau und zu einem anderen Teil im Abgas auf einem gleitenden Temperaturniveau anfällt. Weitere Beispiele wären Hochtemperaturbrennstoffzellen, bei denen Rauchgasabwärme auf einem gleitenden Temperaturniveau anfällt oder solar unterstützte Klimatisierungssysteme, bei denen sowohl solare Antriebswärme auf einem niedrigeren Temperaturniveau als auch Antriebswärme aus einer Zusatzfeuerung auf höherem oder gleitendem Temperaturniveau zur Verfügung stehen.

In allen diesen Fällen läßt sich das höchstmögliche Wärmeverhältnis nur erzielen, wenn die Antriebswärmen gleichzeitig in verschiedene Absorptionsmaschinen unterschiedlicher Stufigkeit oder in verschiedene Stufen einer geeignet konstruierten mehrstufigen Maschine eingekoppelt werden können. Der gleichzeitige Einsatz mehrerer Absorptionsmaschinen ist schon deshalb ungünstig, weil mehrere Absorptionsmaschinen mehr kosten. Auch die derzeit bekannten Verfahren zur mehrstufigen Antriebswärmeeinkopplung in einen Absorptionskreislauf weisen ebenfalls verschiedene Nachteile auf. Insbesondere ist es damit nicht möglich, die derzeit serienmäßig erhältlichen Absorptionsmaschinen mit geringem Aufwand und ohne Eingriff in den internen Lösungskreislauf so zu modifizieren oder zu erweitern, daß Antriebswärmequellen auf verschiedenen Temperaturniveaus und in variablem Verhältnis in die gleiche Maschine eingekoppelt werden können.

Aus US-A 443999 ist ein Energieumwandlungssystem mit einer mehrstufigen Absorptionskältemaschine bekannt, bei der die Abwärme aus der Auspuffleitung eines Verbrennungsmotors in den Hochtemperaturgenerator und die Abwärme eines Motorkühlmittelkreislaufs in den zweiten Generator eingekoppelt wird. Das in dem Hochtemperaturgenerator erzeugte gasförmige Arbeitsmittel wird über eine Rohrleitung zum Kondensator geführt und kondensiert. Diese Rohrleitung durchläuft hierbei den Mitteldruckgenerator, so dass das gasförmige Arbeitsmittel Wärme an den Mitteldruckgenerator als Antriebswärme abgibt.

Es ist daher Aufgabe der vorliegenden Erfindung ein Energieumwandlungssystem mit einer mehrstufigen AKM/AWP, einem thermischen Solarsystem sowie einer Zusatzfeuerung anzugeben, wobei die verschiedenen Antriebswärmen (Solarwärme, Zusatzfeuerung sowie Abgas der Zusatzfeuerung) effektiv und kostengünstig in die mehrstufige AKM/AWP eingekoppelt werden.

Die Lösung dieser Aufgabe erfolgt durch die Merkmale der Ansprüche 1.

Alle mehrstufigen Absorptionsmaschinen enthalten mindestens einen Hochdruckgenerator, in dem Kältemittel auf dem höchsten in der Maschine vorkommenden Temperaturniveau aus dem Sorptionsmittel ausgetrieben wird, und mindestens einen Mitteldruckgenerator, in dem ebenfalls Kältemittel aus dem Sorptionsmittel ausgetrieben wird, wobei der Mitteldruckgenerator durch die Kondensationswärme des im Hochdruckgenerator ausgetriebenen Kältemitteldampfes beheizt wird. Diese Wärmeübertragung erfolgt mittels einer ersten thermischen Kopplungseinrichtung. Dies wird in den derzeit erhältlichen Maschinen dadurch realisiert, dass der im Hochdruckgenerator ausgetriebene Kältemitteldampf direkt auf der Antriebsseite bzw. Kondensatorseite des Mitteldruckgenerators abgehitzt und kondensiert wird, wobei der Mitteldruckgenerator apparatetechnisch identisch ist mit dem Kältemittelkondensator auf dem höchsten vorkommenden Druckniveau.

Durch eine zweite thermische Kopplungseinrichtung wird zusätzliche Antriebswärme auf einem mittleren Temperaturniveau oder mehrere zusätzliche Antriebswärmen auf unterschiedlichen mittleren Temperaturniveaus in die erste thermische Kopplungseinrichtung eingekoppelt. Damit erfolgt die Einkopplung der zusätzlichen Antriebswärme über den Kältemitteldampf in den Mitteldruckgenerator ohne daß lösungsseitig Veränderungen an einem der Wärmetauscher vorgenommen werden müssen, oder dass die Wärmetauscherfläche des Mitteldruckgenerators auf der Antriebsseite in einem festen Verhältnis aufgeteilt werden muss.

Gemäß einer bevorzugten Ausgestaltung der Erfindung koppelt Wärme auf niedrigerem Temperaturniveau über einen oder mehrere Dampferzeuger in den Mitteldruckgenerator ein. Dabei wird der über externe Wärmequellen zusätzlich erzeugte Heizdampf zusammen mit dem vom Hochdruckgenerator kommenden Kältemitteldampf der Kondensatorseite des Mitteldruckgenerators zugeführt und dort kondensiert. Hierbei kann der Kältemitteldampf aus dem Hochdruckgenerator und der zusätzlich erzeugte Heizdampf vor der Zuführung zu dem Mitteldruckgenerator in einer gemeinsamen Leitung zusammengefasst werden.

Gemäß einer weiteren alternativen Ausgestaltung der Erfindung koppelt sämtliche Wärme in den Mitteldruckgenerator mittels eines gemeinsamen Wärmeträgerzwischenkreises ein, wozu der Kältemitteldampf aus dem Hochdruckgenerator in einem zusätzlichen Hochdruckkondensator kondensiert wird, der die Kondensationswärme auf diesen Wärmeträgerkreis koppelt. Alle weiteren Wärmequellen, die auf den Mitteldruckgenerator eingekoppelt werden sollen, koppeln ebenfalls auf diesen Wärmeträgerkreis, der dann den Mitteldruckgenerator auf der Antriebsseite beheizt.

Apparatetechnisch ist es dabei alternativ möglich, alle Wärmeeinkopplungen auf den Wärmeträgerzwischenkreis inklusive der Kältemittelkondensation in einem einzigen Kombiwärmetauscher zusammenzufassen, der über mehrere getrennte Primär-, und einen gemeinsamen Sekundärkreis verfügt.

Durch die Kombination einer derartigen AKM/AWP mit Solarwärme (Solarsystem, mittleres Temperaturniveau) und einer Zusatzheizung (hohes Temperaturniveau), wird ein effektives Energieumwandlungssystem bereitgestellt.

Die Unteransprüche beziehen sich auf vorteilhafte Ausgestaltungen der Erfindung.

Weitere Einzelheiten, Merkmale und Vorteile der Erfindung ergeben sich aus der nachfolgenden Beschreibung bevorzugter Ausführungsformen anhand der Zeichnung. Es zeigt
Fig. 1 eine erste Ausführungsform einer mehrstufige Absorptionskältemaschine mit zusätzlicher Wärmeeinkopplung auf Zwischentemperaturniveaus mittels eines Dampferzeugers;
Fig. 2 und 3 Varianten der Ausführungsform nach Fig. 1;
Fig. 4 ein Energieumwandlungssystem in Form einer Kopplung einer mehrstufigen Absorptionskältemaschine mit zusätzlicher Wärmeeinkopplung auf Zwischentemperaturniveaus mittels eines Dampferzeugers entsprechend Fig. 1 mit einem Verbrennungsmotor;
Fig. 5 ein Energieumwandlungssystem in Form einer Kopplung einer mehrstufigen Absorptionskältemaschine mit zusätzlicher Wärmeeinkopplung auf Zwischentemperaturniveaus mittels eines Dampferzeugers entsprechend Fig. 1 mit einem thermischen Solarsystem und einer Zusatzfeuerung;
Fig. 6 eine zweite Ausführungsform einer mehrstufigen Absorptionskältemaschine mit zusätzlicher Wärmeeinkopplung auf Zwischentemperaturniveaus mittels eines internen Wärmeträgerkreislaufes in serieller Verschaltung;
Fig. 7 bis 14 zeigen Varianten der Ausführungsform nach Fig. 6;
Fig. 15 eine dritte Ausführungsform einer mehrstufigen Absorptionskältemaschine mit zusätzlicher Wärmeeinkopplung auf Zwischentemperaturniveaus mittels eines internen Wärmeträgerkreislaufes in paralleler Verschaltung;
Fig. 16 und 17 zeigen Varianten der Ausführungsform nach Fig. 15;
Fig. 18 eine vierte Ausführungsform einer mehrstufige Absorptionskältemaschine mit zusätzlicher Wärmeeinkopplung auf Zwischentemperaturniveaus mittels eines internen Wärmeträgerkreislaufes und eines kombinierten Kondensator/Koppelwärmetauschers;
Fig. 19 ein Energieumwandlungssystem in Form einer Kopplung einer mehrstufigen Absorptionskältemaschine mit zusätzlicher Wärmeeinkopplung auf Zwischentemperaturniveaus mittels eines internen Wärmeträgerkreislaufs und eines kombinierten Kondensator/Koppelwärmetauschers entsprechend Fig. 18 mit einem Verbrennungsmotor (indirekte Ankopplung an Motorkühimittetkreis);
Fig. 20 ein Energieumwandlungssystem in Form einer Kopplung einer mehrstufigen Absorptionskältemaschine mit zusätzlicher Wärmeeinkopplung auf Zwischentemperaturniveaus mittels eines internen Wärmeträgerkreislaufs und eines kombinierten Kondensator/Koppelwärmetauschers entsprechend Fig. 18 mit einem thermischen Solarsystem und einer Zusatzfeuerung (indirekte Ankopplung an solaren Wärmeträgerkreis);
Fig. 21 ein Energieumwandlungssystem in Form einer Kopplung einer mehrstufigen Absorptionskältemaschine mit zusätzlicher Wärmeeinkopplung auf Zwischentemperaturniveaus mittels eines internen Wärmeträgerkreislaufs und eines kombinierten Kondensator/Koppelwärmetauschers entsprechend Fig. 18 mit einem Verbrennungsmotor (direkte Ankopplung an Motorkühlmittelkreis);
Fig. 22 ein Energieumwandlungssystem in Form einer Kopplung einer mehrstufigen Absorptionskältemaschine mit zusätzlicher Wärmeeinkopplung auf Zwischentemperaturniveaus mittels eines internen Wärmeträgerkreislaufs und eines kombinierten Kondensator/Koppelwärmetauschers entsprechend Fig. 18 mit einem thermischen Solarsystem und Zusatzfeuerung (direkte Ankopplung an solaren Wärmeträgerkreis);
Fig. 23 ein Energieumwandlungssystem in Form einer Kopplung einer mehrstufigen Absorptionskältemaschine und Brennstoffzellen-BHKW mittels zwischengeschaltetem Wärmeträgerkreis und Wärmeentnahme aus dem Wärmeträgerkreis; und
Fig. 24 ein Energieumwandlungssystem in Form einer Kopplung einer mehrstufigen Absorptionskältemaschine und Motor-BHKW mittels zwischengeschaltetem Wärmeträgerkreis und Wärmeentnahme aus dem Wärmeträgerkreis.

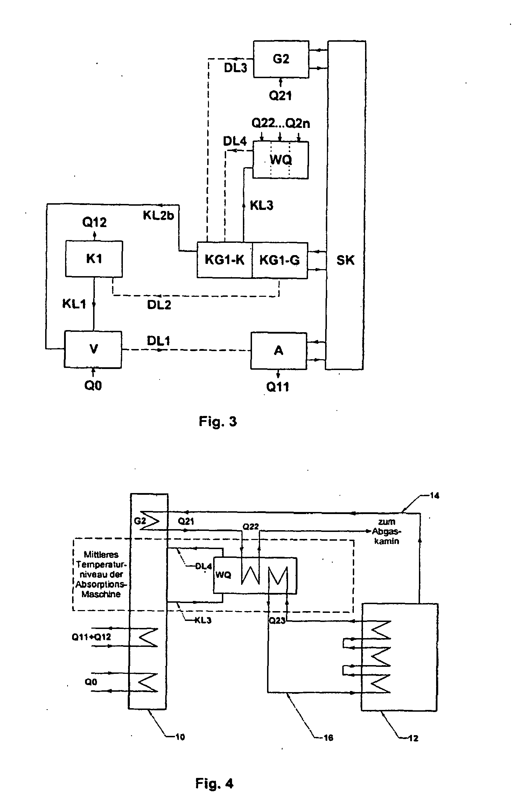

Die in den Figuren 4, 19, 21, 23 und 24 beschriebenen Energieumwandlungssysteme sind nicht Gegenstand der Erfindung und dienen lediglich der Erläuterung.

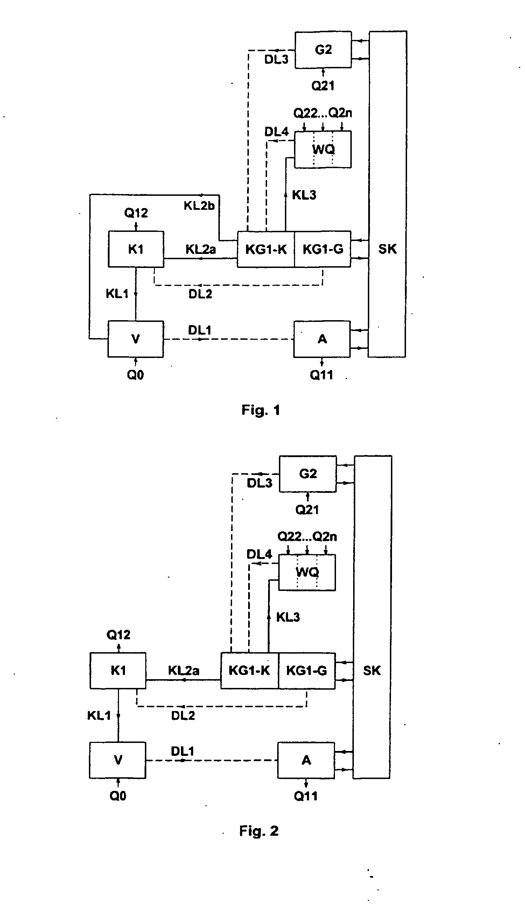

Fig. 1 zeigt eine erste Ausführungsform einer mehrstufigen Absorptionskältemaschine bzw. Absorptionswärmepume (AKM/AWP) mit zusätzlicher Wärmeeinkopplung auf Zwischentemperaturniveaus mittels eines Dampferzeugers WQ. Die AKM/AWP umfaßt einen Verdampfer V, einen Absorber A, einen Mitteldruckkondensator K1, einen Kondensator/Generator KG1 und einen Hochdruckgenerator G2. Der Kondensator/Generator KG1 stellt eine Kombination eines Kondensators und eines Generators mit einer Wärme abgebenden Kondensatorseite KG1-K und einer Wärme aufnehmenden Generatorseite KG1-G dar. Der Absorber A, die Generatorseite KG1-G des Kondensator/Generators KG1 und der Hochdruckgenerator G2 sind über einen Soprtionsmittelkreislauf SK miteinander verbunden. Der Sorptionsmittelkreislauf kann mit einem flüssigen Sorptionsmittel als kontinuierlicher Flüssigkeitskreislauf oder diskontinuierlich mit einem festem Sorptionsmittel ausgebildet sein. Bei einem festem Sorptionsmittel sind Absorber A und Generatorseite KG1-G und Hochdruckgenerator G2 jeweils durch ein Bauteil realisiert, das abwechselnd als Absorber oder Generator arbeitet.

Der Verdampfer V ist über eine erste Dampfleitung DL1 mit dem Absorber verbunden. Der Mitteldruckkondensator K1 ist über eine erste Kondensatleitung KL1 mit dem Verdampfer verbunden. Die Generatorseite KG1-G des Kondensator/Generators KG1 ist mit einer zweiten Dampfleitung DL2 mit dem Mitteldruckkondensator K1 verbunden. Die Kondensatorseite KG1-K des Kondensator/Generators KG1 ist über zweite Kondensatleitung KL2a mit dem Verdampfer V und über eine dritte Kondensatleitung KL2b mit dem Mitteldruckkondensator K1 verbunden. Der Hochdruckgenerator G2 ist über eine dritte Dampfleitung DL3 mit der Kondensatorseite KG1-K verbunden. Der Dampferzeuger WQ ist über eine vierte Dampfleitung DL4 und eine vierte Kondensatleitung KL3 mit der Kondensatorseite KG1-K verbunden.

In dem Verdampfer V wird durch Aufnahme von Umgebungswärme Q0 das über die erste und zweite Kondensatleitung KL1 bzw. KL2b zugeführte flüssige Kältemittel verdampft und damit Nutzkälte erzeugt. Der Kältemitteldampf wird über die erste Dampfleitung DL1 dem Absorber A zugeführt. Im Absorber A wird der Kältemitteldampf durch ein Sorptionsmittel unter Freisetzung von Wärme Q11 (Abwärme im Falle einer AKM, Nutzwärme im Falle einer AWP) absorbiert. Im Hochdruckgenerator wird durch Aufnahme von Hochtemperaturwärme Q21 Kältemitteldampf aus dem Sorptionsmittel des Sorptionsmittelkreislauies SK ausgetrieben. Der Kältemitteldampf wird über die dritte Dampfleitung der Kondensatorseite KG1-K zugeführt und dort kondensiert. Die freiwerdende Kondensationswärme wird unmittelbar als Antriebswärme auf der Generatorseite KG1-G genutzt. Die bauliche Integration von Kondensator und Generator im Kondensator/Generator KG1 und die unmittelbare Zuführung von Kältemitteldampf über die dritte Dampfleitung DL3 stellt eine erste thermische Kopplungseinrichtung dar.

Dem Dampferzeuger WQ werden primärseitig wenigstens eine der zusätzlichen Antriebswärmen Q22 bis Q2n zugeführt und damit Kältemitteldampf erzeugt. Dieser zusätzliche Kältemitteldampf wird der Kondensatorseite KG1-K über die vierte Dampfleitung DL4 zugeführt, wird dort unter Freisetzung von zusätzlicher Antriebswärme kondensiert und das Kondesat wird über die vierte Kondensatleitung KL3 zurück in den Dampferzeuger geführt. Diese Einkopplung von zusätzlichen Antriebswärmen Q21 ... Q2n über den Dampferzeuger WQ in die Kondensatorseite KG1-K stellt eine zweite thermische Kopplungseinrichtung dar.

Die Figuren 2 und 3 zeigen zwei Varianten der Ausführungsform nach Fig. 1, bei denen jeweils eine einzige zweite oder dritte Kondensatleitung KL2a oder KL2b vorgesehen ist. Die Variante nach Fig. 2 ist vorteilhaft, da Drosselverluste durch eine zweistufige Drosselung vermindert werden. Im Mitteidruckkondensator K1 kann ein Teil der Überhitzungswärme des Kältemittelkondensats der Kondensatorseite KG1-K - bezogen auf den Gleichgewichtszustand im Verdampfer V - an die Umgebung abgeführt werden. Bei direkter Einleitung in den Verdampfer - Fig. 3 - stellt sich demgegenüber eine Verringerung der Kälteleistung ein.

Fig. 4 zeigt ein Energieumwandlungssystem in Form einer Kombination einer AKM/AWP 10 gemäß den Figuren 1 bis 3 mit einem Verbrennungsmotor 12. Über eine Auspuffleitung 14 wird heißes Motorabgas dem Hochdruckgenerator G2 der AKM/AWP 10 zur Einkopplung der Antriebeswärme Q21 zugeführt. Das teilabgekühlte Motorabgas wird anschließend dem Dampferzeuger WQ zur Einkopplung einer ersten zusätzlichen Antriebswärme Q22 auf mittlerem Temperaturniveau zugeführt. Über einen Motorkühlmittelkreislauf 16 wird Motorabwärme gesammelt und als eine zweite zusätzliche Antriebswärme Q23 auf mittlerem Temperaturniveau in den Dampferzeuger WQ eingekoppelt.

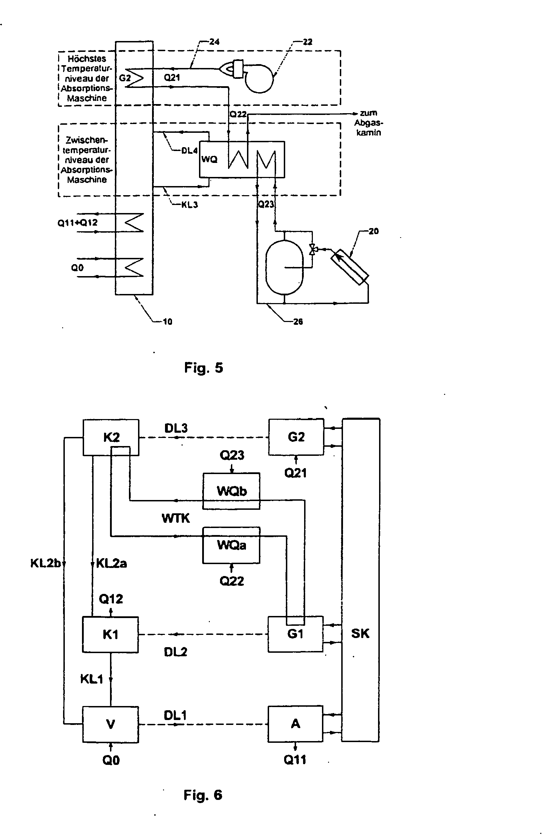

Fig. 5 zeigt ein Energieumwandlungssystem in Form einer Kombination einer AKM/AWP 10 gemäß den Figuren 1 bis 3 mit einem thermischen Solarsystem 20 und einer Zusatzfeuerung 22. Über eine Rauchgasleitung 24 wird heißes Rauchgas aus der Zusatzfeuerung 22 zunächst dem Hochdruckgenerator G2 der AKM/AWP 10 zur Einkopplung der Antriebswärme Q21 zugeführt. Das teilabgekühlte Rauchgas wird anschließend dem Dampferzeuger WQ zur Einkopplung einer ersten zusätzlichen Antriebswärme Q22 auf mittlerem Temperaturniveau zugeführt. Über einen solaren Wärmeträgerkreislauf 26 wird Solarwärme aus dem Solarsystem 20 als zweite zusätzliche Antriebswärme Q23 auf mittlerem Temperaturniveau in den Dampferzeuger WQ eingekoppelt. Das Solarsystem 20 ist in Fig. 5 nur schematisch dargestellt. Es lassen sich herkömmliche Solarheizungssysteme mit und ohne integrierten Wärmespeicher verwenden.

Die Komponenten innerhalb der strichlierten Rechtecke in Fig. 4 und 5 können apparatetechnisch sowohl in die AKM/AWP integriert als auch als externe Einrichtungen ausgeführt werden bzw. nachträglich einer bestehenden AKM/AWP hinzugefügt werden.

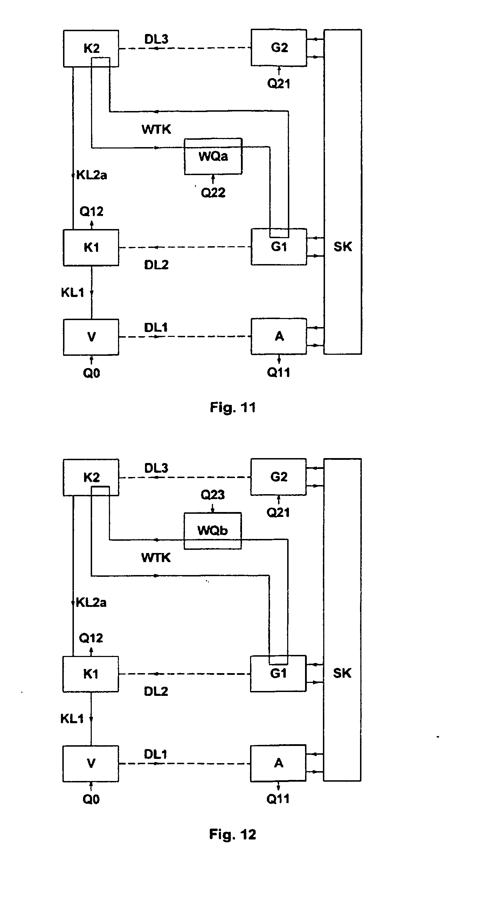

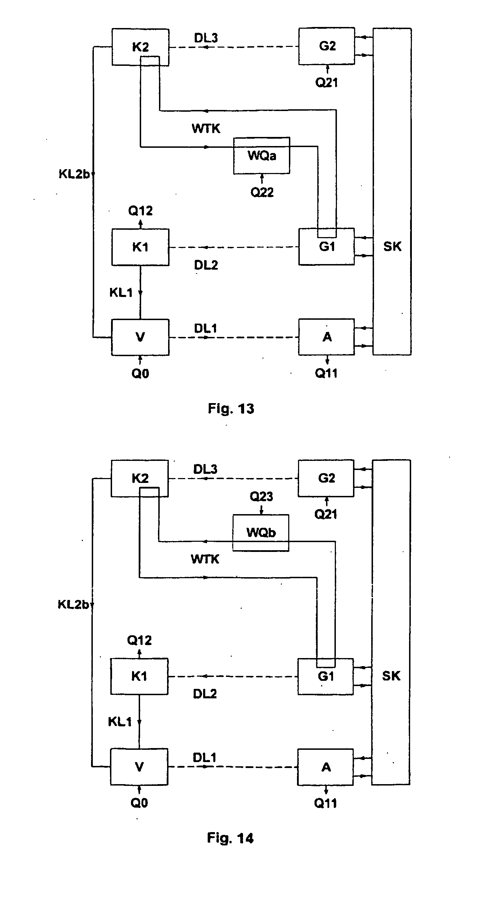

Figuren 6 bis 14 zeigen eine zweite Ausführungsform einer mehrstufigen Absorptionskältemaschine bzw. Absorptionswärmepume (AKM/AWP) mit zusätzlicher Wärmeeinkopplung auf Zwischentemperaturniveaus mittels eines internen Wärmeträgerkreislaufes WTK in serieller Verschaltung mit Varianten. Diese zweite Ausführungsform unterscheidet sich von der ersten Ausführungsform im wesentlichen dadurch, daß anstelle des Kondensator/Generators ein Hochdruckkondensator K2 und ein Mitteldruckgenerator G1 vorgesehen sind, die baulich voneinander getrennt, thermisch jedoch über den internen Wärmeträgerkreislauf WTK miteinander gekoppelt sind. Dieser interne Wärmeträgerkreislauf stellt die erste thermische Kopplungseinrichtung dar. Die zusätzlichen Antriebswärmen Q22 ... Q2n werden in den Wärmeträgerkreislauf WTK mittels der zweiten thermischen Kopplungseinrichtung in Form von Kopplungswärmetauschern WQa und WQb eingekoppelt.

Vorteilhaft ist hierbei, daß durch die Einkopplung der zusätzlichen Antriebswärmen in den internen Wärmträgerkreislauf WTK der Umfang der Anlagenteile, die vakuumdicht ausgeführt werden müssen, geringer ist. Damit ergibt sich ein geringerer apparatetechnischer Aufwand als bei der Zusammenführung von Dampfströmen gemäß der Ausführungsform nach den Figuren 1 bis 3, bei der auch die Wärmetauscher für die Einkopplung der zusätzlichen Antriebswärmen Q22 bis Q2n vakuumdicht ausgeführt werden müssen.

Bei der zweiten Ausführungsform nach Fig. 6 wird in den Wärmeträgerkreislauf WTK in Strömungsrichtung von dem Hochdruckkondensator K2 zu dem Mitteldruckgenerator G1 durch den Kopplungswärmetauscher WQa die zusätzliche Antriebswärme Q22 eingekoppelt. In Strömungsrichtung von dem Mitteldruckgenerator G1 zu dem Hochdruckkondensator K2 durch den Kopplungswärmetauscher WQb die zusätzliche Antriebswärme Q23 eingekoppelt.

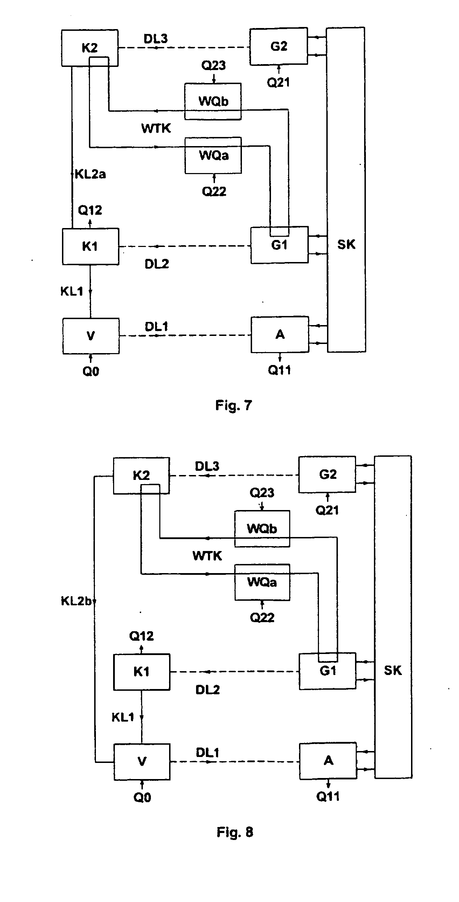

Die Figuren 7 und 8 zeigen zwei Varianten der Ausführungsform nach Fig. 6, bei denen jeweils eine einzige zweite oder dritte Kondensatleitung KL2a oder KL2b vorgesehen ist. Die Variante nach Fig. 7 ist vorteilhaft, da Drosselverluste durch eine zweistufige Drosselung vermindert werden. Im Mitteldruckkondensator K1 kann ein Teil der Überhitzungswärme des Kältemittelkondensats aus dem Hochdruckkondensator K2 - bezogen auf den Gleichgewichtszustand im Verdampfer V - an die Umgebung abgeführt werden. Bei direkter Einleitung in den Verdampfer - Fig. 8 - stellt sich demgegenüber eine Verringerung der Kälteleistung ein.

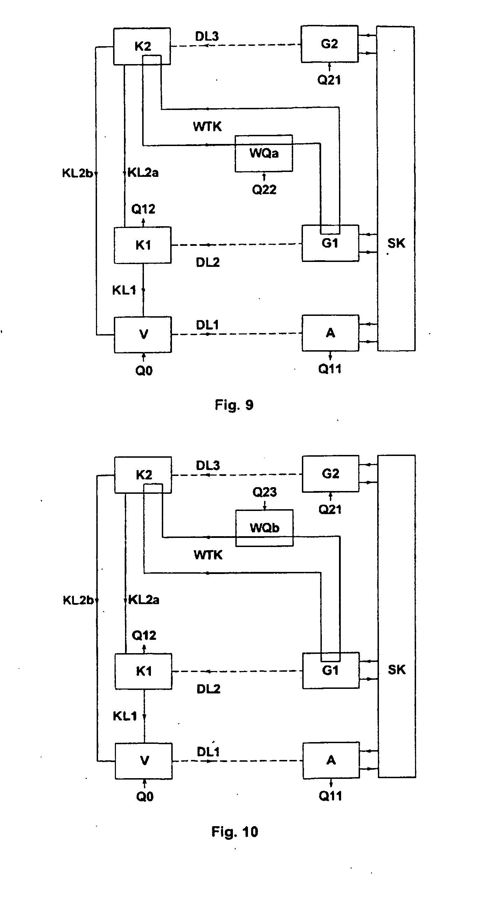

Die Varianten nach den Figuren 9 bis 14 unterscheiden sich von Ausführungsformen nach den Figuren 6 bis 8 lediglich dadurch, daß nur ein Koppfungswärmetauscher WQa oder WQb vorgesehen ist.

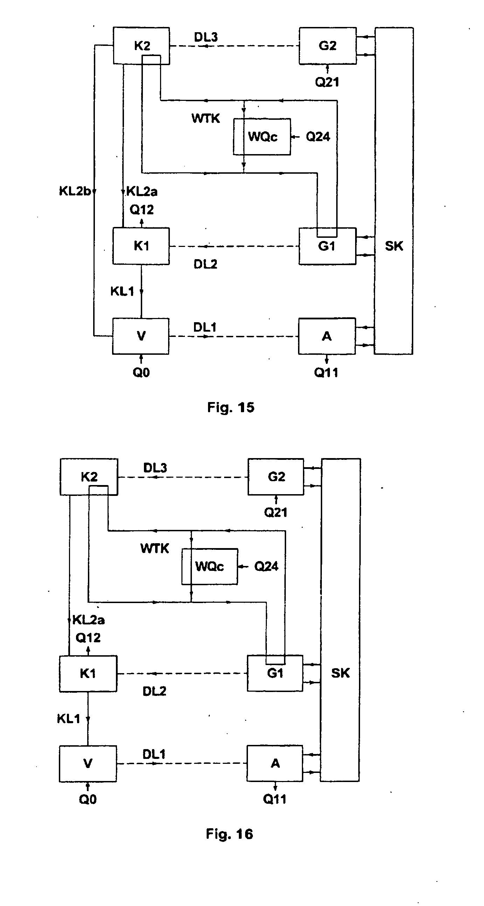

Die Figuren 15 bis 17 zeigen eine dritte Ausführungsform mit Varianten, bei der ein Kopplungswärmetaucher WQc vorgesehen ist, der parallel zu dem Hochdruckkondensator K2 und dem Mitteldruckgenerator G1 in den Wärmeträgerkreislauf WTK geschaltet ist.

Die Varianten nach den Figuren 6 bis 14 lassen sich mit den Varianten gemäß den Figuren 15 bis 17 auch kombinieren.

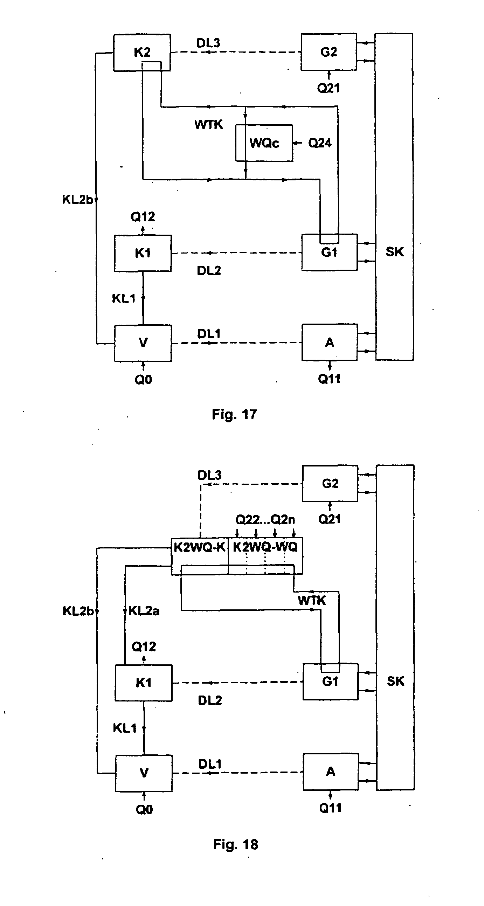

Bei der vierten Ausführungsform der Erfindung nach Fig. 18 ist anstelle von zwei Bauteilen - Hochdruckkondensator K2 und Koppelwärmetauscher WQa, WQb, WQc - ein gemeinsames Kopplungsbauteil K2WQ mit einer Kondensatorseite K2WQ-K und einem Koppelwärmetauscher K2WQ-WQ zur Einkopplung von wenigstens einer zusätzlichen Antriebswärme Q22 Q2n vorgesehen. Der im Hochdruckgenerator G2 erzeugte Kältemitteldampf wird über die dritte Dampfleitung DL3 der Kondenstorseite K2WQ-K zugeführt. Das Kondensat aus der Kondensatorseite K2WQ-K kann über die zweite oder dritte Kondensatleitung KL2a und/oder KL2b dem Mitteldruckkondensator K1 und/oder dem Verdampfer V zugeführt werden.

Die Steuerung und Regelung der AKM/AWP erfolgt über nicht dargestellte Regel-, Schalt- und Drosseleinrichtungen in den Kondensat- und Dampfleitungen sowie innerhalb des Sorptionsmittelkreislaufs SK.

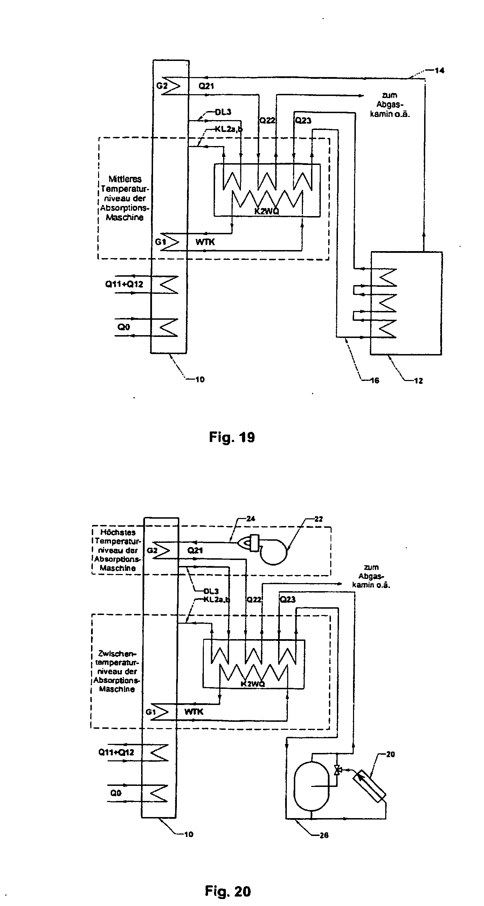

Fig. 19 zeigt, wie Fig. 4, ein Energieumwandlungssystem in Form einer Kombination einer AKM/AWP 10, insbesondere nach Fig. 18, mit einem Verbrennungsmotor 12. Über eine Auspuffleitung 14 wird heißes Motorabgas dem Hochdruckgenerator G2 der AKM/AWP 10 zur Einkopplung der Antriebswärme Q21 zugeführt. Das teilabgekühlte Motorabgas wird anschließend dem Kopplungsbauteil K2WQ zur Einkopplung einer ersten zusätzlichen Antriebswärme Q22 auf mittlerem Temperaturniveau zugeführt. Über einen Motorkühlmittelkreislauf 16 wird eine zweite zusätzliche Antriebswärme Q23 auf mittlerem Temperaturniveau in das Kopplungsbauteil K2WQ eingekoppelt. Das Kopplungsbauteil K2WQ ist als Wärmetauscher ausgeführt, der auf der Wärme aufnehmenden Seite in getrennten Sektionen Kältemittel kondensiert, Abgas abkühlt (Wärme Q22) und Motorkühlmittel rückkühlt (Wärme Q23) und auf der Wärme abgebenden Seite diese Wärmen an den internen Wärmeträgerkreislauf WTK abgibt. Diese Ausführungsform der Erfindung unterscheidet sich damit von der Ausführungsform nach Fig. 4 durch das Kopplungsbauteil K2WQ anstelle des Dampferzeugers WQ und durch den Aggregatzustand des Wärmeträgers zur Beheizung des Mitteldruckgenerators G1.

Fig. 20 zeigt ein Energieumwandlungssystem in Form einer Kombination einer AKM/AWP 10, insbesondere gemäß Fig. 18, mit einem thermischen Solarsystem 20 und einer Zusatzfeuerung 22. Über eine Rauchgasleitung 24 wird heißes Rauchgas aus der Zusatzfeuerung 22 zunächst dem Hochdruckgenerator G2 der AKM/AWP 10 zur Einkopplung der Antriebswärme Q21 zugeführt. Das teilabgekühlte Rauchgas wird anschließend dem Kopplungsbauteil K2WQ zur Einkopplung einer ersten zusätzlichen Antriebswärme Q22 auf mittlerem Temperaturniveau zugeführt. Über einen solaren Wärmeträgerkreislauf 26 wird Solarwärme aus dem Solarsystem 20 als zweite zusätzliche Antriebswärme Q23 auf mittlerem Temperaturniveau in das Kopplungsbauteil K2WQ eingekoppelt. Das Kopplungsbauteil K2WQ ist als Wärmetauscher ausgeführt, der auf der Wärme aufnehmenden Seite in getrennten Sektionen Kältemittel kondensiert, Abgas abkühlt (Wärme Q22) und Wärme aus dem Solarsystem entnimmt (Wärme Q23) und auf der Wärme abgebenden Seite diese Wärmen an den internen Wärmeträgerkreislauf WTK abgibt. Das Solarsystem 20 ist in Fig. 20 nur schematisch dargestellt. Es lassen sich herkömmliche Sotarheizungssysteme mit und ohne integrierten Wärmespeicher verwenden.

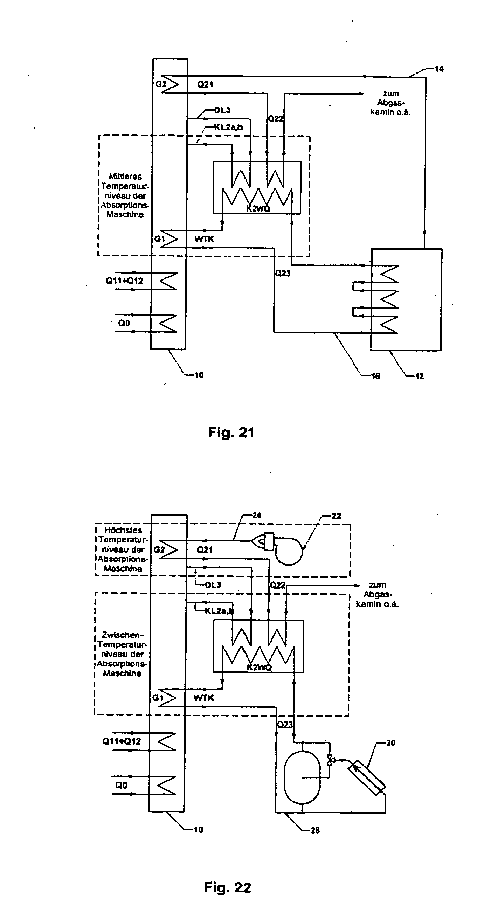

Das Energieumwandlungssystem nach Fig. 21 unterscheidet sich von der Ausführungsform nach Fig. 19 lediglich dadurch, daß der Motorkühlmittelkreislauf 26 und der Wärmeträgerkreislauf WTK zu einem gemeinsamen Kreislauf zusammengefaßt sind. Das heiße Kühlwasser aus dem Verbrennungsmotor 12 durchläuft zunächst die Wärme abgebende Seite des Kopplungsbauteils K2WQ, wird dort weiter aufgeheizt und durchläuft dann den Mitteldruckgenerator G1 der AKM/AWP 10 zur Einkopplung der Kondensationswärme aus dem Kondensator K2WQ-K sowie der zusätzlichen Antriebswärmen Q22 und Q23.

In analoger Weise unterscheidet sich das Energieumwandlungssystem nach Fig. 22 von der Ausführungsform nach Fig. 20 dadurch, daß der solare Wärmeträgerkreislauf 26 und der interne Wärmeträgerkreislauf WTK zu einem gemeinsamen Kreislauf zusammengefaßt sind. Der in dem Solarsystem 20 aufgeheizte Wärmeträger, z. B. Wasser, durchläuft zunächst die Wärme abgebende Seite des Kopplungsbauteils K2WQ, wird dort weiter aufgeheizt und durchläuft dann den Mitteldruckgenerator G1 der AKM/AWP 10 zur Einkopplung der Kondensationswärme aus dem Kondensator K2WQ-K und der zusätzlichen Antriebswärmen Q22 und Q23.

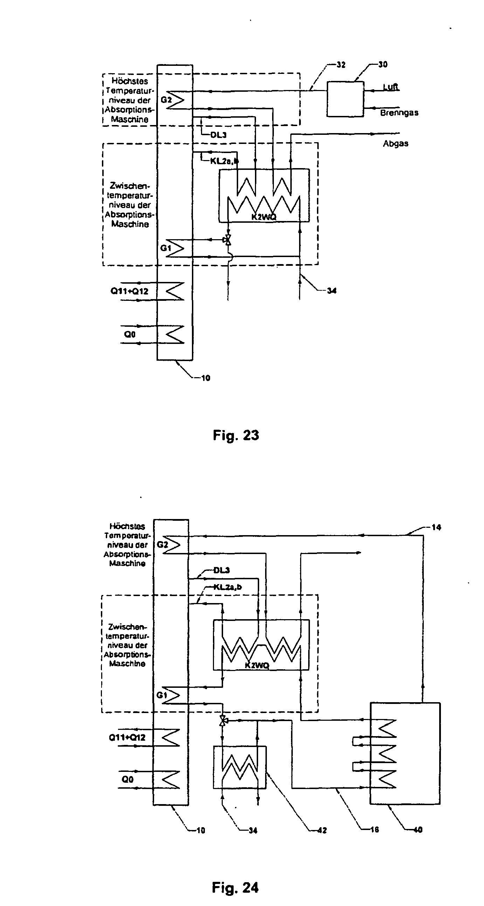

Fig. 23 zeigt eine Energieumwandlungssystem in Form einer erfindungsgemäßen AKM/AWP 10 und einem Brennstoffzellensystem 30 mit der Möglichkeit der Wärmeauskopplung aus der ersten thermischen Kopplungseinrichtung. Das heiße Abgas aus dem Brennstoffzellensystem 30 wird über eine Abgasleitung 32 zunächst dem Hochdruckgenerator G2 der AKM/AWP 10 zur Einkopplung der Antriebswärme Q21 zugeführt. Das teilabgekühlte Abgas wird anschließend der Wärme aufnehmenden Seite des Kopplungsbauteils K2WQ zur Einkopplung der zusätzlichen Antriebswärme Q22 auf mittlerem Temperaturniveau zugeführt. Aus der Wärme abgebenden Seite des Kopplungsbauteils K2WQ wird die Antriebswärme für den Mitteldruckgenerator G1 und Heizwärme für einen externen Heizkreis 34 entnommen.

Fig. 24 zeigt ein Energieumwandlungssystem in Form einer Kombination einer AKM/AWP 10 und einem Motor-BHKW 40, das sich von der Ausführungsform nach Fig. 21 im wesentlichen dadurch unterscheidet, daß mittels eines Auskoppeiwärmetauschers 42 aus der Wärme abgebenden Seite des Kopplungsbauteils K2WQ zusätzlich Nutzwärme für einen externen Heizkreis 34 abgeführt werden kann.

Die Wärmeentnahme in den Heizkreis 34 kann bei den Ausführungsformen nach Fig. 23 und 24 beliebig variiert werden. Es ist sogar ein Teillastbetrieb der Kälteerzeugung möglich, bei dem gleichzeitig annähernd die vollständige Abwärmeleistung des BHKW 40 im Heizkreis zu Heizzwecken zur Verfügung steht. In diesem Betriebsmodus erfolgt die Austreibung von Kältemittel aus dem Sorptionsmittel nur in der oberen Kreislaufstufe der AKM/AWP 10. Die bei der Kondensation des Kältemittels im Hochdruckkondensator K2WQ-K der oberen Kreislaufstufe frei werdende Wärme wird wieder dem Wärmeträgerkreislauf WTK und schließlich dem Heizkreis 34 zugeführt, so daß annähernd die gesamte Abwärmeleistung des BHKW-Aggregates 40 zu Heizzwecken zur Verfügung steht und gleichzeitig die Kälteanlage in 25% Teillast betrieben werden kann.

Die Komponenten innerhalb der strichlierte Rechtecke in den Fig. 19 bis 24 können apparatetechnisch sowohl in die AKM/AWP integriert als auch als externe Einrichtungen ausgeführt werden bzw. nachträglich einer bestehenden AKM/AWP hinzugefügt werden.

### Bezugszeichenliste

- K1: Mitteldruckkondensator
- K2: Hochdruckkondensator
- V: Verdampfer
- A: Absorber
- G1: Mitteldruckgenerator
- G2: Generator auf höchstem Temperatur- und Druckniveau
- KG1: Kondensator/Generator, kombinierter Kondensator und Generator auf mittlerem Temperaturniveau
- KG1-K: Kondensatorseite von KG1
- KG1-G: Generatorsatorseite von KG1
- K2WQ: Kopplungsbauteil
- K2WQ-WQ: Koppelwärmetauscherseite von K2WQ
- K2WQ-K: Kondensatorseite von K2WQ
- WQ: Dampferzeuger zur Einkopplung von einem oder mehreren Wärmeströmen Q22 ... Q2n auf Zwischentemperaturniveau
- WQa,b,c: Koppelwärmetauscher
- WTK: interner Wärmeträgerkreislauf
- SK: Sorptionsmittelkreislauf zur Zirkulation des Sorptionsmittels zwischen den Komponenten A, G1 bzw.K-G1 und G2
- KLxx: Kondensatleitungen
- DLxx: Dampfleitungen
- Q0: Nutzkälte bzw aufgenommene Umgebungswärme beim Einsatz als Wärmepumpe auf unterstem Temperaturniveau
- Q1x: Wärmeabgabe (Abwärme bzw. Nutzwärme beim Einsatz als Wärmepumpe) auf zweitunterstem Temperaturniveau
- Q21: Antriebswärme auf oberstem Temperaturniveau
- Q22...Q2n: zusätzliche Antriebswärmen auf Zwischentemperaturniveaus

- 10: AKM/AWP
- 12: Verbrennungsmotor
- 14: Auspuffleitung
- 16: Motorkühlmittelkreislauf

- 20: Solarsystem
- 22: Zusatzfeuerung
- 24: Rauchgasleitung
- 26: solarer Wärmeträgerkreislauf

- 30: Brennstoffzellensystem
- 32: Abgasleitung
- 34: externer Heizkreis

- 40: Motor-BHKW
- 42: Auskoppe!wärmetauscher

## Patentansprüche

1. Energieumwandlungssystem mit mindestens
• einer Absorptionskältemaschine oder Absorptionswärmepumpe, und
• einer Zusatzheizung zur Bereitstellung zusätzlicher Antriebswärme,
• wobei die Absorptionskältemaschine oder Absorptionswärmepumpe umfasst:
• mindestens einen ersten Kondensator (K1) zum Verflüssigen von Kältemittel,
• einen Verdampfer (V) zur Erzeugung von Nutzkälte bzw. zur Aufnahme von Umgebungswärme,
• einen Absorber (A) zum Aufnehmen von Kältemittel in das Sorptionsmittel,
• mindestens einem Mitteldruckgenerator (G1) zum Austreiben von Kältemittel aus dem Sorptionsmittel auf einem Zwischentemperatumiveau,
• einen Hochtemperaturgenerator (G2) zum Einkoppeln von Antriebswärme auf höchstem Temperaturniveau zum Austreiben von Kältemittel aus dem Sorptionsmittel,
• einen zweiten Kondensator (K2;KG1-K; K2WQ-K) zum Verflüssigen von Kältemitteldampf,
• einen Sorptionsmittelkreislauf (SK) zur kontinuierlichen oder diskontinuierlichen Zirkulation des Sorptionsmittels zwischen dem Absorber (A), dem wenigstens einen Mitteldruckgenerator (G1; KG1-G), und dem Hochdruckgenerator (G2), und
• eine erste thermische Kopplungseinrichtung (2) zur Übertragung der Wärme aus dem zweiten Kondensator (K2; KG1-K; K2WQ-K) als Antriebswärme auf den wenigstens einen Mitteldruckgenerator (G1; KG1-G), und
• eine zweite thermische Kopplungseinrichtung (4) zum Einkoppeln von zusätzlicher Antriebswärme (WQ, WQa, WQb, WQc) auf einem mittleren Temperaturniveau in die erste thermische Kopplungseinrichtung und damit in den Mitteldruckgenerator (G1;KG1-G),
• wobei die Antriebswärme aus der Zusatzheizung zunächst in den zweiten Generator (G2) eingekoppelt, **dadurch gekennzeichnet,**
• **dass** das Energieumwandlungssystem ein Solarsystem mit oder ohne Wärmespeicher aufweist, das Wärme über einen Wärmeträgerkreis zur Verfügung stellt,
• **dass** der Wärmeträgerkreis des Solarsystems zusätzliche Antriebswärme in die zweite thermische Kopplungseinrichtung einkoppelt,
und/oder
**dass** die Zusatzheizung eine Zusatzfeuerung ist und das aus dem zweiten Generator (G2) kommende teilabgekühlte Abgas der Zusatzfeuerung zusätzliche Antriebswärme in die zweite thermische Kopplungseinrichtung einkoppelt.

2. Energieumwandlungssystem nach Anspruch 1, **dadurch gekennzeichnet, dass** die erste thermische Kopplungseinrichtung so ausgelegt ist, dass aus ihr Nutzwärme auskoppelbar ist.

3. Energieumwandlungssystem nach einem der vorhergehenden Ansprüche, **dadurch gekennzeichnet,**
• **dass** die erste thermische Kopplungseinrichtung durch einen Kondensator/Generator (KG1) auf mittlerem Druckniveau, mit einer Kondensatorseite (KG1-K) zum Kondensieren von Kältemitteldampf und einer Generatorseite (KG1-G) zum Austreiben von Kältemitteldampf aus dem Sorptionsmittel realisiert ist,
• dass der Kondensator (K1) über eine erste Kondensatleitung (KL1) mit dem Verdampfer (V) verbunden ist,
• dass die Kondensatorseite (KG1-K) des Kondensator/Generators (KG1) über eine zweite Kondensatleitung (KL2a) mit dem Kondensator (K1) und/oder über eine dritte Kondensatleitung (KL2b) mit dem Verdampfer (V) verbunden ist,
• dass der Absorber (A) über eine erste Dampfleitung (DL1) mit dem Verdampfer (V) verbunden ist,
• **dass** die Generatorseite (KG1-G) des Kondensator/Generators (KG1) über eine zweite Dampfleitung (DL2) mit dem Kondensator (K1) verbunden ist,
• das der Hochdruckgenerator (G2) über eine dritte Dampfleitung (DL3) mit der Kondensatorseite (KG1-K) des Kondensator/Generators (KG1) verbunden ist,
• **dass** die zweite thermische Kopplungseinrichtung durch einen Dampferzeuger realisiert ist, der durch die zusätzlichen Antriebswärmen Kältemitteldampf erzeugt, der über eine vierte Dampfleitung (DL4) der Kondensatorseite (KG1-K) des Kondensator/Generators (KG1) zugeführt wird, und
• **dass** der Dampferzeuger (WQ) über eine vierte Kondensatleitung (KL3) mit der Kondensatorseite (KG1-K) des Kondensator/Generators (KG1) verbunden ist.

4. Energieumwandlungssystem nach Anspruch 3, **dadurch gekennzeichnet, dass** die dritte und die vierte Dampfleitung (DL3, DL4) vor dem Eintritt in die Kondensatorseite (KG1-K) des Kondensator/Generators (KG1) zu einer gemeinsamen Dampfleitung zusammen gefasst sind.

5. Energieumwandlungssystem nach einem der vorhergehenden Ansprüche 1 bis 2, **dadurch gekennzeichnet,**
• **dass** die erste thermische Kopplungseinrichtung durch einen internen Wärmeträgerkreislauf (WTK) zur Übertragung der Wärme aus dem zweiten Kondensator (K2) als Antriebswärme auf den Mitteldruckgenerator (G1) realisiert ist,
• **dass** die zweite thermische Kopplungseinrichtung durch wenigstens einen Koppelwärmetauscher (WQa, WQb, WQc) zum Einkoppeln der zusätzlichen Antriebswärme auf den internen Wärmeträgerkreislauf realisiert ist,
• **dass** der erste Kondensator (K1) über eine erste Kondensatleitung (KL1) mit dem Verdampfer (V) verbunden ist,
• **dass** der zweite Kondensator (K2) über eine zweite Kondensatleitung (KL2a) mit dem ersten Kondensator (K1) und/oder über eine dritte Kondensatleitung (KL2b) mit dem Verdampfer (V) verbunden ist,
• **dass** der Absorber (A) über eine erste Dampfleitung (DL1) mit dem Verdampfer (V) verbunden ist,
• dass der Mitteldruckgenerator (G1) über eine zweite Dampfleitung (DL2) mit dem ersten Kondensator (K1) verbunden ist, und
• dass der Hochdruckgenerator (G2) über eine dritte Dampfleitung (DL3) mit dem zweiten Kondensator (K2) verbunden ist.

6. Energieumwandlungssystem nach Anspruch 5, **dadurch gekennzeichnet, dass** wenigstens ein erster Koppelwärmetauscher (WQa) zusätzliche Antriebswärme in den von dem zweiten Kondensator (K2) zu dem Mitteldruckgenerator (G1) strömenden Wärmeträgerstrom des Wärmeträgerkreislaufes (WTK) einkoppelt und/oder dass wenigstens ein zweiter Koppelwärmetauscher (WQb) zusätzliche Antriebswärme in dem von dem Mitteldruckgenerator (G1) zu dem zweiten Kondensator (K2) strömenden Wärmeträgerstrom des Wärmeträgerkreislaufes (WTK) einkoppelt.

7. Energieumwandlungssystem nach Anspruch 5, **dadurch gekennzeichnet, dass** der wenigstens eine Koppelwärmetauscher (WQc) zur Einkopplung zusätzlicher Antriebswärme parallel zum zweiten Kondensator (K2) in den Wärmeträgerkreislauf (WTK) geschaltet ist.

8. Energieumwandlungssystem nach einem der Ansprüche 5 bis 7, **dadurch gekennzeichnet, dass** wenigstens der zweite Generator (G2) und der zweite Kondensator (K2) apparatetechnisch in einem Bauteil integriert sind.

9. Energieumwandlungssystem nach Anspruch 5, **dadurch gekennzeichnet, dass** der zweite Kondensator (K2WQ-K) und der wenigstens eine Koppelwärmetauscher (K2WQ-WQ) in einem Bauteil integriert sind.

## Claims

1. Energy conversion system with at least
- one absorption refrigerator or absorption heat pump, and
- a supplementary heater for providing additional driving heat,
- wherein the absorption refrigerator or absorption heat pump comprises:
- at least a first condenser (K1) for liquefying refrigerant,
- an evaporator (V) for generating useful refrigeration or for absorbing ambient heat,
- an absorber (A) for absorbing refrigerant into the sorbent,
- at least one medium pressure generator (G1) for expelling refrigerant from the sorbent at an intermediate temperature level,
- a high temperature generator (G2) for inputting driving heat at the highest temperature level for expelling refrigerant from the sorbent,
- a second condenser (K2; KG1-K; K2WQ-K) for liquefying refrigerant vapour,
- a sorbent circuit (SK) for continuous or intermittent circulation of the sorbent between the absorber (A), the at least one medium pressure generator (G1; KG1-G) and the high pressure generator (G2), and
- a first thermal coupler (2) for transferring the heat from the second condenser (K2; KG-1 K; K2WQ-K) as driving heat to the at least one medium pressure generator (G1; KG1-G), and
- a second thermal coupler (4) for inputting additional driving heat (WQ, Wqa, WQb, WQc) at a medium temperature level into the first thermal coupler and thereby into the medium pressure generator (G1; KG1-G),
- wherein the driving heat from the supplementary heater is first of all put into the second generator (G2), **characterized in that**
- the energy conversion system comprises a solar system having or not having a heat accumulator providing heat through a heat carrier circuit,
- that the heat carrier circuit of the solar system puts additional heat into the second thermal coupler, and/or
- the supplementary heater is a supplementary combustion and the partially cooled exhaust gas of the supplementary combustion coming from the second generator (G2) puts additional driving heat into the second thermal coupler.

2. Energy conversion system according to claim 1, **characterised in that** the first thermal coupler is designed so that useful heat can be taken from it.

3. Energy conversion system according to any one of the preceding claims, **characterised in that**
- the first thermal coupler is constituted by a condenser/generator (KG1) at a medium pressure level, with a condenser side (KG1-K) for condensing refrigerant vapour, and a generator side (KG1-G) for expelling refrigerant vapour from the sorbent,
- the condenser (K1) is connected via a first condensate pipe (KL1) to the evaporator (V),
- the condenser side (KG1-K) of the condenser/generator (KG1) is connected via a second condensate pipe (KL2a) to the condenser (K1) and/or via a third condensate pipe (KL2b) to the evaporator (V),
- the absorber (A) is connected via a first vapour pipe (DL1) to the evaporator (V),
- the generator side (KG1-G) of the condenser/generator (KG1) is connected via a second vapour pipe (DL2) to the condenser (K1),
- the high pressure generator (G2) is connected via a third vapour pipe (DL3) to the condenser side (KG1-K) of the condenser/generator (KG1),
- the second thermal coupler is constituted by a vapour generator which by means of the additional driving heats generates refrigerant vapour which is delivered via a fourth vapour pipe (DL4) to the condenser side (KG1-K) of the condenser/generator (KG1), and
- the vapour generator (WQ) is connected via a fourth condensate pipe (KL3) to the condenser side (KG1-K) of the condenser/generator (KG1).

4. Energy conversion system according to claim 3, **characterised in that** the third and fourth vapour pipes (DL3, DL4) are combined into one common vapour pipe before the inlet into the condenser side (KG1-K) of the condenser/generator (KG1).

5. Energy conversion system according to any one of the preceding claims 1 to 2, **characterised in that**
- the first thermal coupler is constituted by an internal heat carrier circuit (WTK) for transferring the heat from the second condenser (K2) as driving heat to the medium pressure generator (G1),
- the second thermal coupler is constituted by at least one coupling heat exchanger (WQa, WQb, WQc) for inputting the additional driving heat into the internal heat carrier circuit,
- the first condenser (K1) is connected via a first condensate pipe (KL1) to the evaporator (V),
- the second condenser (K2) is connected via a second condensate pipe (KL2a) to the first condenser (K1) and/or via a third condensate pipe (KL2b) to the evaporator (V),
- the absorber (A) is connected via a first vapour pipe (DL1) to the evaporator (V),
- the medium pressure generator (G1) is connected via a second vapour pipe (DL2) to the first condenser (K1), and
- the high pressure generator (G2) is connected via a third vapour pipe (DL3) to the second condenser (K2).

6. Energy conversion system according to Claim 5, **characterised in that** at least a first coupling heat exchanger (WQa) inputs additional driving heat into the heat carrier flow of the heat carrier circuit (WTK) flowing from the second condenser (K2) to the medium pressure generator (G1), and/or at least a second coupling heat exchanger (WQb) inputs additional driving heat into the heat carrier flow of the heat carrier circuit (WTK) flowing from the medium pressure generator (G1) to the second condenser (K2).

7. Energy conversion system according to claim 5, **characterised in that** the at least one coupling heat exchanger (WQc) is connected into the heat carrier circuit (WTK) parallel to the second condenser (K2) for inputting of additional driving heat.

8. Energy conversion system according to any one of claims 5 to 7, **characterised in that** at least the second generator (G2) and the second condenser (K2) are integrated in terms of apparatus engineering into one component.

9. Energy conversion system according to claim 5, **characterised in that** the second condenser (K2WQ-K) and the at least one coupling heat exchanger (K2WQ-WQ) are integrated into one component.

## Revendications

1. Système de conversion d'énergie avec au moins:
- un appareil frigorifique à absorption ou une pompe frigorifique à absorption,
- un chauffage supplémentaire pour la mise à disposition de la chaleur motrice supplémentaire,
- dans lequel l'appareil frigorifique à absorption ou la pompe frigorifique à absorption comprend:
- au moins un premier condensateur (K1) pour la liquéfaction de l'agent réfrigérant,
- un évaporateur (V) pur la génération de froid utile ou pour l'absorption de chaleur ambiante,
- un absorbeur (A) pour l'absorption de l'agent réfrigérant dans l'agent de sorption,
- au moins un générateur de moyenne pression (G1) pour l'expulsion de l'agent réfrigéant hors de l'agent de sorption à un niveau de température intermédiaire,
- un générateur de haute température (G2) pour l'injection de chaleur motrice à un niveau de température maximal pour l'expulsion de l'agent réfrigérant hos de l'agent de sorption,
- un second condensateur (K2; KG1-K; K2WQ-K) pour la liquéfaction de la vapeur de l'agent réfrigéant,
- un circuit d'agent de sorption (SK) pour la circulation continue ou discontinue de l'agent de sorption entre l'absorbeur (A), ledit au mois un générateur de moyenne pression (G1; KG1-G) et le générateur de haute pression (G2), et
- un premier dispositif de couplage thermique (2) pour le transfert de la chaleur provenant du second condensateur (K2; KG1-K; K2WQ-K) sous forme de chaleur motrice audit au moins un générateur de moyenne pression (G1; KG1-G), et
- un second dispositif de couplage thermique (4) pour l'injection de chaleur motrice supplémentaire (WQ, Wqa, WQb, WQc) à un niveau de température moyen dans le premier dispositif de couplage thermique et, donc, dans le générateur de moyenne pression (G1; KG1-G),
- la chaleur motrice sortant du chauffage supplémentaire étant d'abord injectée dans le second générateur, caractérisé a ce que,
- le système de conversion d'énergie comprend un système solaire avec ou sans un accumulateur de chaleur furnissant de la chaleur par un circuit de fluide caloporteur,
- le circuit de fluide caloporteur du système solaire inject de la chaleur motrice supplémentaire dans le second dispositif de couplage thermique, et/ou
- la chauffage supplémentaire est une installation du chaffe et le gaz d'échappement de l'installation du chaffe partiellement refroidi sortant du second générateur inject de la chaleur motrice supplémentaire dans le second dispositif de couplage thermique.

2. Système de conversion d'énergie selon l'une quelconque des revendications 1, **caractérisé en ce que** le premier dispositif de couplage thermique est conçu de manière à pouvoir sortir la chaleur utile de celui-ci.

3. Système de conversion d'énergie selon l'une quelconque des revendications précédentes, **caractérisé en ce que**,
- le premier dispositif de couplage thermique est réalisé à l'aide d'un condensateur/générateur (KG1) à un niveau de pression moyen, avec un côté condensateur (KG1-K) pour la condensation de la vapeur de l'agent réfrigérant et un côté générateur (KG1-G) pour l'expulsion de la vapeur de l'agent réfrigérant hors de l'agent de sorption,
- le condensateur (K1) est relié à l'évaporateur (V) par une première conduite de condensât (KL1),
- le côté condensateur (KG1-K) du condensateur/générateur (KG1) est relié au condensateur (K1) par une deuxième conduite de condensât (KL2a) et/ou à l'évaporateur (V) par une troisième conduite de condensât (KL2b),
- l'absorbeur (A) est relié à l'évaporateur (V) par une première conduite de vapeur (DL1),
- le côté générateur (KG1-G) du condensateur/générateur (KG1) est relié au condensateur (K1) par une deuxième conduite de vapeur (DL2),
- le générateur de haute pression (G2) est relié au côté condensateur (KG1-K) du condensateur/générateur (KG1) par une troisième conduite de vapeur (DL3),
- le second dispositif de couplage thermique est réalisé à l'aide d'un générateur de vapeur qui génère de la vapeur de l'agent réfrigérant au moyen des chaleurs motrices supplémentaires, laquelle vapeur est amenée au côté condensateur (KG1-K) du condensateur/générateur (KG1) par une quatrième conduite de vapeur (DL4), et
- le générateur de vapeur (WQ) est relié au côté condensateur (KG1-K) du condensateur/générateur (KG1) par une quatrième conduite de condensât.

4. Système de conversion d'énergie selon la revendication 3, **caractérisé en ce que** la troisième et la quatrième conduite de vapeur (DL3, DL4) sont réunies pour former une conduite de vapeur commune avant l'entrée dans le côté condensateur (KG1-K) du condensateur/générateur (KG1).

5. Système de conversion d'énergie selon l'une quelconque des revendications précédentes 1 à 2, **caractérisé en ce que**,
- le premier dispositif de couplage thermique est réalisé à l'aide d'un circuit de fluide caloporteur interne (WTK) pour le transfert de la chaleur hors du second générateur (K2) sous forme de chaleur motrice au générateur de moyenne pression (G1),
- le second dispositif de couplage thermique est réalisé à l'aide d'au moins un échangeur de chaleur de couplage (WQa, WQb, WQc) pour l'injection de la chaleur motrice supplémentaire au circuit de fluide caloporteur interne,
- le premier condensateur (K1) est relié à l'évaporateur (V) par une première conduite de condensat (KL1),
- le second condensateur (K2) est relié au premier condensateur (K1) par une deuxième conduite de condensat (KL2a) et/ou à l'évaporateur (V) par une troisième conduite de condensat (KL2b),
- l'absorbeur (A) est relié à l'évaporateur (V) par une première conduite de vapeur (DL1),
- le générateur de moyenne pression (GI) est relié au premier condensateur (K1) par une deuxième conduite de vapeur (DL2), et
- le générateur de haute pression (G2) est relié au second condensateur (K2) par une troisième conduite de vapeur (DL3),

6. Système de conversion d'énergie selon la revendication 5, **caractérisé en ce qu'**au moins un premier échangeur de chaleur de couplage (WQa) injecte la chaleur motrice supplémentaire dans le courant de fluide caloporteur du circuit de fluide caloporteur (WTK) s'écoulant entre le second condensateur (K2) et le générateur de moyenne pression (G1) et/ou **en ce qu'**au moins un second échangeur de chaleur de couplage (WQb) injecte de la chaleur motrice supplémentaire dans le (WTK) s'écoulant entre le générateur de moyenne pression (G1) et le second condensateur (K2).

7. Système de conversion d'énergie selon la revendication 5, **caractérisé en ce que** ledit au moins un échangeur de chaleur de couplage (WQc) est monté dans le circuit de fluide caloporteur (WTK) pour l'injection de la chaleur motrice supplémentaire parallèlement au second condensateur (K2).

8. Système de conversion d'énergie selon l'une quelconque des revendications 5 à 7, **caractérisé en ce qu'**au moins le second générateur (G2) et le second condensateur (K2) sont intégrés dans un élément de construction selon la technique d'appareillage.

9. Système de conversion d'énergie selon la revendication 5, **caractérisé en ce que** le second condensateur (K2WQ-K) et ledit au moins un échangeur de chaleur de couplage (K2WQ-WQ) sont intégrés dans un élément de construction.
